# EUROPEAN PATENT APPLICATION

(11) **EP 2 881 603 A1**
(43) Date of publication of application: **10.06.2015**
(21) Application number: 13195671.6
(22) Date of filing: 04.12.2013
(51) Int. Cl.: F16C 35/077

(54) **A bearing arrangement, a motor with a bearing arrangement, and a method for preventing rotation of an outer bearing ring**

(71) Applicant: ABB Technology Ltd, 8050 Zürich (CH)
(72) Inventor: Andersson, Åke, 724 61 Västerås (SE)
(74) Representative: Savela, Reino Aleksi

(57) **Abstract**

A bearing arrangement comprising a bearing 1 having an inner bearing ring 3, an outer bearing ring 5 and a plurality of rolling elements 7 arranged between the inner bearing ring and the outer bearing ring, and further comprising a bearing seat 9 supporting the bearing, and a locking ring 11 arranged between the outer bearing ring and the bearing seat. The locking ring is secured to the outer bearing ring. The arrangement further comprises a locking device 14, 17 arranged between the locking ring and the bearing seat, which locking device is configured to prevent rotation of the locking ring, and thereby prevent rotation of the outer bearing ring, in relation to the bearing seat. The locking device comprises a locking pin 14, mounted in a hole 15 provided in a circumferential surface of either one of the locking ring 11 or the bearing seat 9 and having a projecting part that projects from the circumferential surface, and the locking device further comprises a groove 17 provided in the other one of the locking ring 11 and the bearing seat 9 and adapted to receive said locking pin 14. The bearing arrangement may be used in a motor. A corresponding method is also described.

## Description

### Technical field of the invention

The present disclosure relates to a bearing arrangement comprising a bearing having a locking ring arranged between the outer bearing ring and the bearing seat and which is secured to the outer bearing ring, and a locking device arranged between the locking ring and the bearing seat, in order to prevent rotation of the locking ring and the outer bearing ring in relation to the bearing seat.

The present disclosure further relates to a motor comprising a rotating shaft having the bearing arrangement, and also to a method for preventing rotation of an outer bearing ring in relation to the bearing seat.

### Background

Usually, when bearings are used for supporting a rotating shaft of an electric motor, there is a fixed bearing at one end, which is mounted to the shaft by a grip fit, and a bearing at the other end that is mounted such that it can move in the axial direction in order to adapt to movements of the shaft due to thermal expansion. In order for an axial movement to be possible, there is arranged a small clearance between the outer bearing ring and the seat in which the bearing is supported. It is then known to happen in some motor applications that the outer ring of the bearing that supports the motor shaft starts to rotate. In particular in motor applications where the motor is in a vertical position, the motor is sensitive to radial rotation forces acting on the motor shaft end. This may for example occur when a fan or another device, e.g. a pump, is mounted on the shaft end and thereby may cause an unbalance. This unbalance that may be caused by the radial rotation force can create a movement of the outer bearing ring in the tangential direction, a so called cage creep or cage migration in the bearing. In the long run this will cause considerable wear on the bearing seat as well as on the bearing and, as a consequence, reduce the lifetime of the motor and the bearing.

In prior art, there are proposed different solutions to this problem. According to one general concept, the solution is to provide some kind of arrangement that locks the outer bearing ring to the bearing seat. Such a solution is proposed in, for example, WO 2009047973 where recesses are formed in the axial direction on the inside surface of the bearing housing and the outside of the outer bearing ring, and a preload regulation component is inserted between the facing recesses. In DE 102007049049 is disclosed how the outer bearing ring is provided with a groove and how a separate locking tab is detachably fastened to a component in which the outer ring is seated. The locking tab is arranged to engage in said groove in the outer bearing ring and in a milled slot in the seat component and thereby the outer bearing ring is locked to the seat component. In JP 2004239388 is disclosed how the outer circumference of the outer bearing ring is provided with a pin that cooperates with a notch formed in the bearing house whereby rotation of the outer ring is prevented. In US 20130028550 is disclosed a number of variants of which some includes an annular key member interposed between the outer bearing ring and an axle box. The outer bearing ring is provided with a key groove in its axial end face, into which is engaged an engaging member that secures the outer bearing ring to the annular key member. Alternatively, the outer peripheral surface of the outer bearing ring is made eccentric such that it will be locked in an annular key member provided with a corresponding eccentric inner surface. The annular key member is then locked to the axle box by means of a member engaging in a key groove in the inner peripheral surface of the axle box. These solutions have the disadvantage of necessitating some kind of operation that involves performing a machining operation on the outer bearing ring or some other type of deformation, which will cause mechanical stress and even risk damaging the bearing. In US 6270260 is disclosed another variant with a cover that is press fitted over the outer bearing ring. The cover is provided with a tang projecting radially from an outer peripheral surface of the cover. The bearing with the cover is inserted in a bearing hub, and the end surface of the hub is provided with a boss projecting axially, which will prevent that the bearing with the axial cover rotates more than one full turn in either direction, due to the tang entering into contact with the boss. In this case there is the disadvantage of the bearing being subjected to mechanical deformation due to the press fitting of the cover over the bearing.

### Summary of the invention

An object of the present disclosure is to provide a bearing arrangement, in which rotation of the outer bearing ring in relation to a bearing seat is prevented, in a more simple and economically efficient manner than according to prior art, and that also results in less strain on the bearing.

Accordingly is defined a bearing arrangement comprising a bearing having an inner bearing ring, an outer bearing ring and a plurality of rolling elements arranged between the inner bearing ring and the outer bearing ring, the outer bearing ring comprising an outer circumferential surface, and the bearing arrangement further comprising a bearing seat supporting the bearing, a locking ring arranged between the outer bearing ring and the bearing seat, which locking ring is secured onto the outer circumferential surface of the outer bearing ring, and a locking device arranged between the locking ring and the bearing seat, said locking device being configured to prevent rotation of the locking ring, in relation to the bearing seat, characterized in that the locking device comprises a locking pin, and a groove adapted to receive the locking pin, and that either one of the locking ring or the bearing seat comprises said locking pin mounted in a hole provided in a circumferential surface thereof, and that the other one of the locking ring and the bearing seat comprises said groove.

Through this is achieved numerous advantages. By having a separate locking pin inserted in a simple hole, the locking pin may be constituted by a standard component, e.g. a solid cylindrical pin or a spring type straight pin. The hole that has a shape corresponding to the pin may be achieved by for example drilling a hole in the surface. The locking pin can then be mounted in the hole by e.g. using a hammer or similar tool. The locking ring may also be a standard component. Further, the groove can be obtained by machining a groove in the concerned surface. Thus the proposed solution related to the locking pin and the groove is very simple and economical, in particular since it does not require any special design of the locking ring, nor the locking pin. The solution is space efficient, the bearing may be a standard bearing since it is not at all affected by the locking device. Further, there is no need to make any grooves or holes in the end surface of the bearing rings, and the outer circumferential surface of the outer bearing ring may be made such that it is free of any grooves, holes or other interferences with its surface. The manufacturing process will be simplified, more smooth running and less costly, as compared to prior art.

According to one feature, the locking ring may be cylindrical ring without any projecting parts. It need not be machined to obtain any tabs or similar that are integrated parts of the locking ring, as in prior art. This has the advantage of offering the possibility to use a standard component as a locking ring. However, it should also be mentioned that there is nothing that prevents that the locking ring forms part of a cover or lid, that may cover the bearing at least partly.

According to one embodiment, the locking ring may have an inner bore with a diameter that allows the bearing to be slip-fitted into said bore. According to a further feature, the locking ring is secured to the outer bearing ring by means of an adhesive. Such an adhesive may be a glue or Loctite, for example. By attaching the locking ring to the outer circumferential surface of the outer bearing ring with an adhesive, the advantage is obtained that there is no deformation or risk of deformation of the bearing. This will result in that the bearing will keep its performance and its lifetime will be prolonged. There is no need for special solutions involving the machining of grooves in the outer bearing surface, which may also lead to deformation of the bearing, and also press fitting is avoided which may e.g. have an adverse effect on tolerances in the bearing and reduce its lifetime. Further, the use of an adhesive to secure the locking ring to the outer bearing ring provides a very robust assembly of bearing and locking ring.

In the arrangement, the locking ring preferably has an inner bore that is concentric with the bearing. Further, the inner bore of the bearing seat would also preferably be concentric with the bearing.

According to an alternative embodiment, the locking ring may be provided with an axial slit, thereby making it resilient in a radial direction. Due to the built in resiliency of such a locking ring, it may be fitted onto the outer circumferential surface of the outer bearing with a grip fit such that it does not risk causing any deformation of the bearing, similar to the fixed bearing grip fit previously mentioned. It also displays advantages already described above in connection with the other embodiment of the locking ring, such as simple to produce, low cost.

According to another feature, the locking pin may be a straight pin that is press-fitted in the hole. As mentioned before, this may be a standard component, e.g. a solid pin, or a spring type pin. A spring type pin is a hollow pin provided with a slit wall that provides resiliency and the pin can then be conveniently press-fitted into a suitable hole.

The locking pin may also have other shapes than circular e.g. rectangular, and the hole would then have a corresponding shape. The hole may be a through hole in the wall of the locking ring or the bearing seat, or it may be a non through hole. It is also conceivable that the hole has an inner thread and that the locking pin has a threaded end for engagement with the thread in the hole.

According to one embodiment, the locking pin may be mounted in a hole provided in an outer circumferential surface of the locking ring and have a projecting part that projects from the outer circumferential surface, and the groove may be provided in the bearing seat. This allows for simple assembly of the bearing arrangement and the use of standard parts in many cases.

The groove may be a radial groove provided in a radially extending end surface of the bearing seat. The shape of the groove is adapted to the shape chosen for the locking pin.

According to another, alternative embodiment, the locking pin may be mounted in a hole provided in an inner circumferential surface of the bearing seat and have a projecting part that projects from the inner circumferential surface, and the groove may be provided in an outer circumferential surface of the locking ring.

Further, the groove may be configured to allow movement of the locking pin in an axial direction of the bearing, and thereby allow movement of the locking ring and the bearing in an axial direction of the bearing. As already mentioned, when bearings are used for supporting a rotating shaft of an electric motor, there is usually a fixed bearing at one end and a bearing at the other end that is mounted such that it can move in the axial direction in order to adapt to movements of the shaft due to thermal expansion. The described feature of the present bearing arrangement is consequently suitable for such an application. It may be mentioned that there may also be provided a spring element between the assembly, comprising the bearing and the locking ring, and the bearing seat, in order to obtain a preload on the bearing, in accordance with known bearing arrangements. Further, in order to allow for the axial displacement, there is also a small play between the locking pin and the inner wall of the hole which also allows for some minor displacement of the locking pin in a circumferential direction. However, a resulting rotation of the locking ring, and consequently the outer bearing ring, in relation to the bearing seat should not be more than 20 degrees, preferably less than 5 degrees.

According to another embodiment, the bearing seat forms a part of a motor end shield. By incorporating the bearing seat in the end shield of the motor is obtained a simple and economic solution.

According to another aspect of the present disclosure is defined a motor comprising a rotating shaft, characterized in that it comprises a bearing arrangement, according to any one of the claims. The advantages for such a motor have already been described.

According to yet another aspect of the present disclosure is proposed a method for preventing rotation of an outer bearing ring of a bearing, when the bearing is mounted on a rotating shaft, comprising:
- providing a hole in a circumferential surface of either one of a locking ring or a bearing seat,
- mounting a locking pin in said hole, such that it projects outwards from the circumferential surface,
- providing the other one of the locking ring and the bearing seat with a groove adapted to receive said locking pin,
- mounting the locking ring externally on the outer bearing ring and securing the locking ring onto an outer circumferential surface of the outer bearing ring,
- mounting the bearing, with the locking ring, in the bearing seat and engaging the locking pin in said groove whereby a rotational movement of the outer bearing ring in relation to the bearing seat is prevented. This method displays advantages corresponding to the previously described advantages.

The method may comprise the additional features of providing a locking pin that is a straight pin and press-fitting it into the hole; securing the locking ring to the outer bearing ring by means of an adhesive, such as glue or Loctite; providing a groove as a radial groove in a radially extending end surface of the bearing seat.

Further features and advantages of the invention will also become apparent from the following detailed description of different embodiments, given as examples only.

### Brief description of the drawings

A detailed description of the present invention and embodiments thereof, given as examples only, will now be made with reference to the accompanying schematic drawings, in which:
Fig. 1 is a perspective view of a locking ring and a locking pin according to an embodiment of the present invention,
Fig. 2 is a perspective view of a locking ring according to another embodiment,
Fig. 3 is a perspective view of a bearing mounted in a locking ring according to an embodiment of the present invention,
Fig. 4 shows a bearing arrangement, according to an embodiment of the present invention,
Fig. 5 shows a schematic illustration of an electric motor having a bearing arrangement according to an embodiment of the invention, and
Fig. 6 illustrates a method according to an embodiment of the invention.

### Detailed description

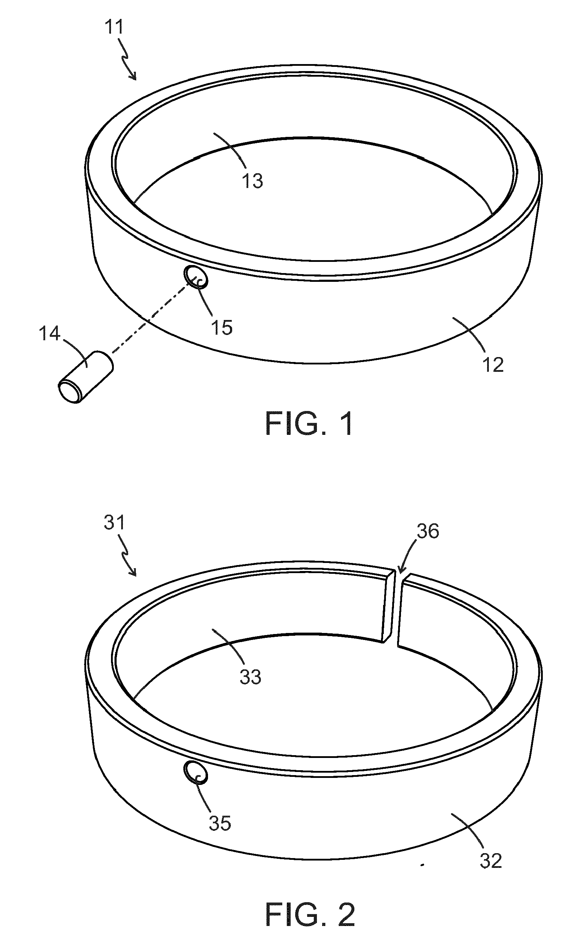

In Fig. 1 is shown a locking ring 11 having a cylindrical shape. In the outer circumferential surface 12 of the locking ring there is provided a hole 15. The hole may be a through hole or a non through hole, and it may for example be machined in the locking ring wall by drilling. In the illustrated example the hole15 is circular but it may also have other shapes. The locking ring has an inner bore 14 with a diameter that is adapted to the outer diameter of the bearing 1 for which it is intended to be used. The diameter of the inner bore 14 is slightly smaller than the outer diameter of the bearing in order to allow the bearing to be slip fitted into the bore of the locking ring. The slip fit gap between the bearing and the locking ring must also be sufficiently wide to accommodate an adhesive, by means of which the locking ring is eventually secured to the bearing in order to prevent rotation of the bearing, and in particular its outer bearing ring, in relation to the locking ring. The adhesive may be applied either to the internal surface of the inner bore 13 of the locking ring 11, or to the outer circumferential surface 10 of the outer bearing ring 5, or to both surfaces. The axial height of the locking ring is usually made to correspond to the axial height of the bearing, such that it totally surrounds the bearing in the axial direction when mounted thereon.

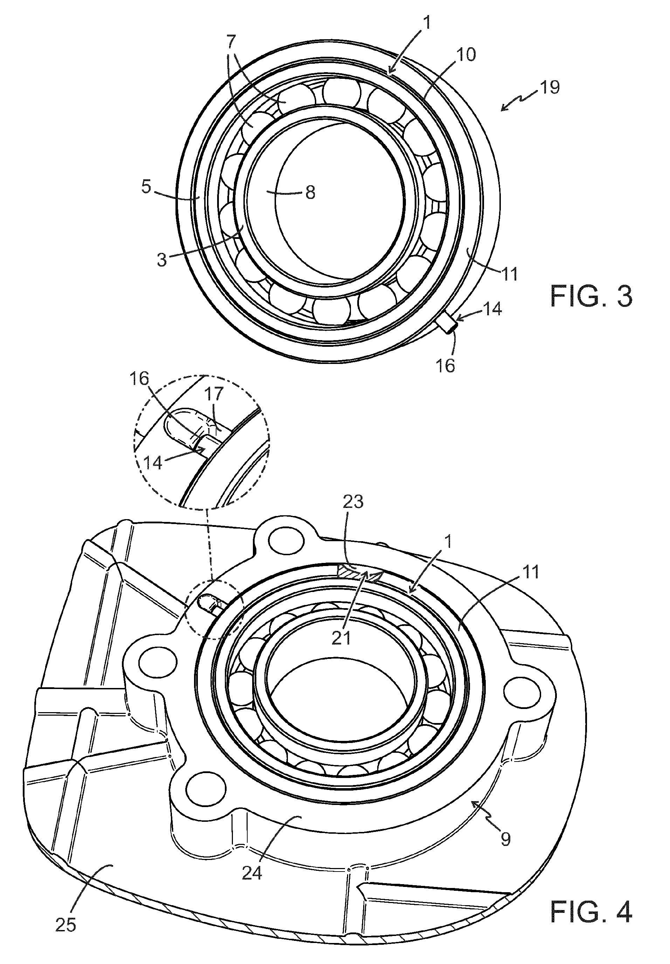

In Fig. 1 is also shown a locking pin 14 configured to be insertable into the hole 15 in the locking ring 11. In the illustrated example, the locking pin has a cylindrical shape in order to fit into the hole of the locking ring. The locking pin has a length such that, after having been inserted into the hole by one of its ends, the other end of the locking pin projects radially from the hole and the external circumferential surface 12 of the locking ring, and at a right angle to said surface. This is also illustrated in Fig. 3. In the illustrated example, the locking 14 pin is press fitted into the hole 15, but also other ways of securing the locking pin in the hole are conceivable, such as the use of an adhesive, e.g. glue or Loctite. A suitable locking pin for press fitting is a spring type straight pin. Alternatively, the pin may be a solid pin or the hole may have an inner thread and the locking pin may be a screw that may be screwed into said hole.

In Fig. 2 is illustrated another embodiment of a locking ring 31. This locking ring has a hole 35 in an outer circumferential surface 32 and an inner bore 31, similar to the first described locking ring. In addition, this locking ring 31 has an axial slit 36. This slit provides an opening in the locking ring along its entire axial length. By means of this slit, a certain resiliency of the locking ring is obtained such that it may be mounted externally on a bearing with a very narrow fit. The bearing may even have an outer diameter that is slightly larger than the inner diameter of the locking ring since the resiliency provided by the slit 36 would be sufficient to still make it possible to insert the bearing into the locking ring, and without damaging the outer bearing ring. The locking ring 31 will then be secured onto the outer circumferential surface of the outer bearing ring with a very light press fit, which is just sufficient to prevent rotation of the outer bearing ring 5 in relation to the locking ring 31.

Fig. 3 illustrates a locking ring 11 mounted on a bearing 1. The bearing 1 comprises an inner bearing ring 3, an outer bearing ring 5 and rolling elements 7 arranged between the inner and outer bearing rings. The rolling elements may for example be balls or rollers. The bearing has an inner bore 8 such that it can receive a rotating shaft of e.g. a motor. The locking ring is secured to the outer bearing ring by means of an adhesive, such as a suitable glue or Loctite. Alternatively, a locking ring with a slit may be used, which may be mounted by a grip fit, thereby making the use of adhesive possibly superfluous. In Fig. 3 is also visible how the locking pin 14 is mounted in the hole 15 in the locking ring 11 and how it has a projecting part 16 that projects in the radial direction from the outer surface of the assembly 19 formed by the locking ring and the bearing.

In Fig. 4 is illustrated an embodiment of the bearing arrangement according to the present invention. The assembly 19 formed by the locking ring 11 and the bearing 1, as shown in Fig. 3, is mounted in a bearing seat 9. The bearing seat 9 has an inner bore 21 adapted to receive the assembly 19 with only a small clearance between the inner circumferential surface 23 of the bore and the outer circumferential surface 12 of the locking ring. Thus, the inner diameter of the bore 21 is only slightly larger than the outer diameter of the locking ring. This clearance is necessary in order to allow the assembly 19 to be able to move axially in relation to the bearing seat 9 as a result of thermal expansion of the shaft on which the assembly may be mounted. In the inner circumferential surface 23 of the bearing seat bore 21 there is provided a groove 17, extending in a radial direction into the bearing seat. In the illustrated example the grove is made in a radially extending end surface 24 of the bearing seat 9. This groove is configured to receive the projecting locking pin 14 when the assembly is mounted in the bearing seat. The width of the groove 17 is only slightly smaller than the width of the locking pin, so that there is practically no movement allowed for the locking pin in the circumferential, rotational direction, when it is engaged in the groove 17. Thereby, the locking ring 11 is prevented from rotating in relation to the bearing seat 9, and also the outer bearing ring 5 is prevented from rotating in relation to the bearing seat 9, since the outer bearing ring is secured to the locking ring. However, in the axial direction, the groove 17 is made wider than the locking pin 11 in order to allow for movement of the assembly 19 in the axial direction, which may be due to thermal expansion of a shaft onto which it is mounted.

The grove may be obtained by a machining operation.

As is apparent from Fig. 3, the inner bore 13 of the locking ring 11 is concentric with the bearing 1, and the inner bore 21 of the bearing seat 9 is also concentric with the bearing 1, as can be seen in Fig. 4.

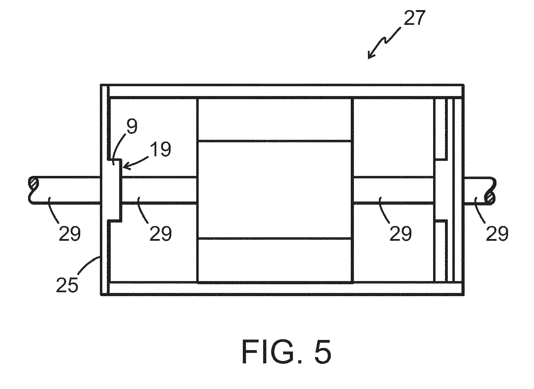

The bearing seat may form part of an end shield 25 of an electric motor 27. In Fig. 5 is schematically illustrated an electric motor 27, comprising a rotating shaft 29 which is mounted in a bearing arrangement according to an embodiment of the invention, comprising a bearing seat 9 and an assembly 19 comprising a bearing 1 and a locking ring 11 or 31. The bearing seat 9 is provided in the end shield 25 of the motor, as shown in Fig. 4. The bearing arrangement may either be mounted at the outgoing shaft end that is connected to a device driven by the motor, e.g. a pump or a fan, or it may be mounted at the other shaft end where usually a motor cooling fan is connected.

Naturally, it is conceivable to reverse the location of the hole for the locking pin and the groove adapted to receive the projecting end of the locking pin, by providing the groove in the outer circumferential surface of the locking ring and providing the hole for the locking pin in an inner circumferential surface in the bearing seat. In such a case, the groove in the locking ring may even be formed as a slit in the locking ring, and a locking ring 31 as described above in relation to Fig. 2 may be used.

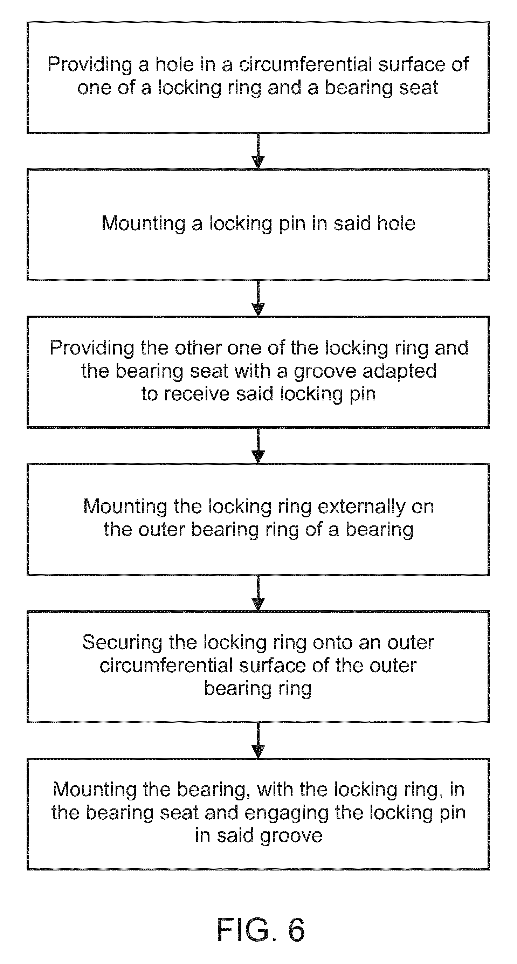

Finally, in Fig. 6 is illustrated a method for preventing rotation of an outer bearing ring of a bearing, when the bearing is mounted on a rotating shaft, which comprises the following steps: - providing a hole in a circumferential surface of either one of a locking ring or a bearing seat,
- mounting a locking pin in said hole, whereby it projects outwards from the circumferential surface,
- providing the other one of the locking ring and the bearing seat with a groove adapted to receive said locking pin,
- mounting the locking ring externally on the outer bearing ring of the bearing and securing the locking ring onto an outer circumferential surface of the outer bearing ring,
- mounting the bearing, with the locking ring, in the bearing seat and engaging the locking pin in said groove whereby a rotational movement of the outer bearing ring in relation to the bearing seat is prevented.

The method may also comprise different additional steps that are independent of each other and that may comprise providing a locking pin that is a straight pin and press-fitting it into the hole; securing the locking ring to the outer bearing ring by means of an adhesive; providing a groove as a radial groove in a radially extending end surface of the bearing seat.

The invention shall not be considered limited to the illustrated embodiments, but can be modified and altered in many ways, as realised by a person skilled in the art, without departing from the scope defined in the appended claims.

## Claims

1. A bearing arrangement comprising a bearing (1) having an inner bearing ring (3), an outer bearing ring (5) and a plurality of rolling elements (7) arranged between the inner bearing ring and the outer bearing ring, the outer bearing ring comprising an outer circumferential surface (10), and the bearing arrangement further comprising a bearing seat (9) supporting the bearing, a locking ring (11; 31) arranged between the outer bearing ring (5) and the bearing seat (9), which locking ring is secured onto the outer circumferential surface (10) of the outer bearing ring, and a locking device (14, 17) arranged between the locking ring (11; 31) and the bearing seat (9), said locking device being configured to prevent rotation of the locking ring in relation to the bearing seat, **characterized in that** the locking device comprises a locking pin (14), and a groove (17; 36) adapted to receive the locking pin, and that either one of the locking ring (11; 31) or the bearing seat (9) comprises said locking pin (14) mounted in a hole (15; 35) provided in a circumferential surface (12; 23; 32) thereof, and that the other one of the locking ring and the bearing seat comprises said groove (17; 36).

2. The bearing arrangement according to claim 1, wherein the locking ring (11; 31) is a cylindrical ring without any projecting parts.

3. The bearing arrangement according to any one of the preceding claims, wherein the locking ring (11; 31) has an inner bore (13; 33) with a diameter that allows the bearing (1) to be slip-fitted into said bore.

4. The bearing arrangement according to any one of the preceding claims, wherein the locking ring (11; 31) is secured to the outer bearing ring (5) by means of an adhesive.

5. The bearing arrangement according to any one of the preceding claims, wherein the locking ring (31) is provided with an axial slit (36) thereby making it resilient in a radial direction.

6. The bearing arrangement according to any one of the preceding claims, wherein the locking pin (14) is a straight pin that is press-fitted in the hole (15; 35).

7. The bearing arrangement according to any one of the preceding claims, wherein the locking pin (14) is mounted in a hole (15; 35) provided in an outer circumferential surface (12; 32) of the locking ring (11; 31) and has a projecting part (16) that projects from the outer circumferential surface, and wherein the groove (17) is provided in the bearing seat (9).

8. The bearing arrangement according to claim 7, wherein the groove (17) is a radial groove provided in a radially extending end surface (24) of the bearing seat (9).

9. The bearing arrangement according to any one of claims 1-7, wherein the locking pin (14) is mounted in a hole provided in an inner circumferential surface of the bearing seat (9) and has a projecting part that projects from the inner circumferential surface, and wherein the groove (36) is provided in an outer circumferential surface (32) of the locking ring (31).

10. The bearing arrangement according to any one of the preceding claims, wherein the groove (17) is configured to allow movement of the locking pin (14) in an axial direction of the bearing (9), and thereby allow movement of the locking ring (11; 31) and the bearing (1) in an axial direction of the bearing.

11. The bearing arrangement according to any one of the preceding claims, wherein the bearing seat (9) forms a part of a motor end shield (25).

12. A motor (27) comprising a rotating shaft (29), **characterized in that** it comprises a bearing arrangement, according to any one of claims 1-11, on said rotating shaft.

13. A method for preventing rotation of an outer bearing ring of a bearing, when the bearing is mounted on a rotating shaft, comprising:
- providing a hole in a circumferential surface of either one of a locking ring or a bearing seat,
- mounting a locking pin in said hole, such that it projects outwards from the circumferential surface,
- providing the other one of the locking ring and the bearing seat with a groove adapted to receive said locking pin,
- mounting the locking ring externally on the outer bearing ring and securing the locking ring onto an outer circumferential surface of the outer bearing ring,
- mounting the bearing, with the locking ring, in the bearing seat and engaging the locking pin in said groove whereby a rotational movement of the outer bearing ring in relation to the bearing seat is prevented.

14. A method according to claim 13, comprising providing a locking pin that is a straight pin and press-fitting it into the hole.

15. A method according to any one of claims 13-14, comprising securing the locking ring to the outer bearing ring by means of an adhesive.

16. A method according to any one of claims 13-15, comprising providing a groove as a radial groove in a radially extending end surface of the bearing seat.
